# EUROPEAN PATENT SPECIFICATION

(11) **EP 2 190 655 B1**
(45) Date of publication and mention of the grant of the patent: **11.04.2012**
(21) Application number: 07825192.3
(22) Date of filing: 27.09.2007
(51) Int. Cl.: B29D 30/00

(54) **PROCESS AND PLANT FOR PRODUCING TYRES FOR VEHICLE WHEELS**
VERFAHREN UND ANLAGE ZUR HERSTELLUNG VON REIFEN FÜR FAHRZEUGRÄDER
PROCÉDÉ ET INSTALLATION POUR PRODUIRE DES PNEUS POUR ROUES DE VÉHICULE

(43) Date of publication of application: 02.06.2010
(60) Divisional application: 10002164.1
(73) Proprietor: PIRELLI TYRE S.p.A., 20126 Milano (IT)
(72) Inventor: MANCINI, Gianni, I-20126 Milano (IT); MARCHINI, Maurizio, I-20126 Milano (IT); MUSITELLI, Ezio, I-20126 Milano (IT); SANGIOVANNI, Stefano, I-20126 Milano (IT)
(74) Representative: Bottero, Claudio
(86) International application number: PCT/IB2007/002816
(87) International publication number: WO 2009/040594

(56) References cited:
- EP-A- 1 568 475
- WO-A-2006/033120
- WO-A-2006/128969
- US-A1- 2007 068 617

## Description

The present invention relates to a process for producing tyres for vehicle wheels.

The present invention also relates to a plant for producing tyres for vehicle wheels, able to be used for carrying out the aforementioned production process.

Tyre production cycles provide that, after a building process wherein the various components of the tyre itself are made and/or assembled in one or more building lines, a moulding and vulcanization process is carried out in a suitable vulcanization line, adapted for defining the tyre structure according to a desired geometry and tread pattern.

A tyre generally comprises a toroidally ring-shaped carcass including one or more carcass plies, strengthened with reinforcing cords lying in substantially radial planes (a radial plane contains the rotation axis of the tyre). Each carcass ply has its ends integrally associated with at least one metal reinforcing annular structure, known as bead core, constituting the reinforcing at the beads, i.e. at the radially inner ends of the tyre, having the function of enabling the assembling of the tyre with a corresponding mounting rim. Placed crown wise to said carcass is a band of elastomeric material, called tread band, within which, at the end of the moulding and vulcanization steps, a raised pattern is formed for ground contact. A reinforcing structure, generally known as belt structure, is arranged between the carcass and the tread band. Such structure usually comprises, in the case of car tyres, at least two radially superposed strips of rubberised fabric provided with reinforcing cords, usually of metal material, arranged parallel to each other in each strip and in a crossed relationship with the cords of the adjacent strip, preferably symmetrically arranged with respect to the equatorial plane of the tyre. Preferably, the belt structure further comprises at a radially outer position thereof, at least on the ends of the underlying belt strips, also a third layer of textile or metallic ' cords, circumferentially disposed (at zero degrees).

Finally, in tyres of the tubeless type, a radially inner layer, called liner, is present which has imperviousness features for ensuring the air-tightness of the tyre itself.

To the aims of the present invention and in the following claims, by the term "elastomeric material" it is intended a composition comprising at least one elastomeric polymer and at least one reinforcing filler. Preferably, such composition further comprises additives such as cross-linking and/or plasticizing agents. By virtue of the cross-linking agents, such material may be cross-linked by heating, so as to form the final manufactured article.

In the present context, by the term "green tyre" it is indicated a tyre obtained by the building process and not vulcanized yet.

US 2007/0068617 describes an automatic plant for producing tyres includes a plurality of work stations and a plurality of devices for transferring the tyres from one work station to another work station and for moving the tyres within a same work station. Each work station is designed to assemble one or more corresponding structural components of the tyres. A method for producing tyres is also described which includes making at least one structural component of the tyres, supplying the at least one structural component to a toroidal support, assembling the at least one structural component on the toroidal support, transferring the tyres from one work station to another, moving the tyres within a same work station, and vulcanizing the tyres.

WO 2006/033120, in the name of the same Applicant, describes a plant and method for manufacturing tyres comprising a first carcass-assembling line in which carcass structures are formed by assembling semifinished products, and a separate second carcass building line in which carcass structures are built by laying elementary components onto a toroidally shaped carcass-building support comprising an inflatable bladder set in an inflated condition. Belt structures possibly provided with a tread band and produced separately are each coaxially disposed around a built carcass structure on the toroidally shaped building support and applied thereto following a radial expansion of the inflatable bladder. In a vulcanisation mould the building support is submitted to an over-inflation step to press the tyre against the inner walls of the mould.

EP 1 568 475 describes a tire building system, which does not require prolonging tact time for tire building, specific occupying space for endless circulative traveling of a building carriage, and increasing noises and vibrations, and which is free from possibility of premature deterioration of carriage positioning accuracy. The system includes workstations configured to mount applicable tire components onto a building drum, respectively, a building carriage configured to support the building drum to thereby move the building drum among the respective workstations; and carriage guiding means for guiding a movement of the building carriage on a predetermined path.

WO 2006/128969 describes a green tyre conveyor able to move a green tyre from a pick-up point to below the loading manipulator of a curing press without requiring separate equipment. The conveyor is intended to move on a horizontal rail in the normal manner.

WO 01/32409, in the name of the same Applicant, describes a tyre building line provided with working stations, each arranged to make and assemble at least one structural component of the tyre being processed, wherein at least one series of tyres is treated at the same time, comprising at least one first and a second model of tyres differing from each other, and wherein the tyre transfer to the vulcanization line is carried out through robotized arms and according to a transferring rate equal to the transferring rate of the tyres to each of said working stations.

EP 1 481 791 A2 describes a method of simultaneously producing tyres in a multi-phase sequential production system, the tyres being selected from a group of tyres with different build specifications in different sizes. The method comprises the steps of: selecting the tyre building equipment and materials required for constructing the respective type of tyre; calculating the corresponding number of cycles that each building equipment must perform to build a given lot; and automatically changing to a second building specification at a lot change, by switching to the second build specification after the last tyre of the first build specification passes; repeating the automatic changing to the next build specification at each station as each last tyre of each prior lot passes until a final lot is produced. The production system has at least four carcass building stations, each station being spaced at a predetermined distance, and preferably a tread belt building line, having working stations, separate from the carcass building line, wherein the carcass and the tread belt assemblies are joined in a segmented self-locking mould.

EP 0 776 756 A1 describes an apparatus for constructing tyres for vehicle wheels having a carcass bundle with an inner layer, at least one carcass ply, two sidewall portions and two tyre bead cores having a belt bundle with at least one belt ply and one tread strip, wherein at least one carcass construction station and/or a belt construction station is provided with at least two fitting arrangements, which may be controlled independently of each other for fitting with the materials, which are identical in nature, and at least one conveying arrangement for supplying identical components, associated with each fitting arrangement.

The methods of the type described in WO 01/32409 are aimed at increasing productivity in manufacturing processes of tyres built on a toroidal forming support and using elementary semi-finished products for building by automated standardised steps, synchronised with each other. Such methods, however, do not allow obtaining a high technological flexibility, that is, the possibility of using for each tyre elementary semi-finished products differing by type of elastomeric material or by type of textile or metal reinforcing cord. In fact, such methods are suitable for producing tyres that differ in limited features, such as dimensions, optional presence of some structural components of the tyre - such as one or two carcass plies, reinforcing elements in bead zone - , arrangement of the coils of rubber metal wires forming the bead cores in the bead zone, more or less extended belt layer at zero degrees, presence of a layer and sublayer in the tread band.

The methods illustrated in EP 1 481 791 and in EP 0 776 756, on the contrary, are technologically flexible as they allow obtaining tyres with semi-finished products having different features from each other, but they are limited in terms of productivity, for example as the model of tyre to be produced changes and require large sized plants for carrying out them.

The Applicant has noted that in the production plants of this latter type, the management of a large number of materials and/or semi-finished products causes problems in synchronising the production steps of the various portions making up the tyre and thereby problems in the general management of the production plant with negative consequences on productivity.

The Applicant has further noted that the teaching illustrated in EP 1 481 791 relating to the performance of the assembling, shaping and vulcanizing steps of a tyre in a single working station, while simplifying the layout, is a source of problems from the production point of view, since a bottleneck occurs which is difficult to manage both in the event of a failure of an upstream station, and in the case of dimensional or technological variations of the tyre to manufacture.

The Applicant has therefore perceived that in order to produce tyres with technological requirements very different from one another, improving the productivity of processes of the type shown in WO 01/32409, and avoiding production plants of large dimensions and difficult to manage and synchronise like those illustrated in EP 1 481 791 A2 and EP 0 776 756 A1 it is necessary to have integrated production plants, that is, plants wherein different independent production units are suitably integrated and synchronised with each other while keeping their flexibility.

The Applicant has further understood that having a carcass structure building line, a crown structure building line and a line for assembling and shaping the tyre separate from a moulding and vulcanization line, having substantially similar production rates it is possible to simultaneously produce small lots of tyres with a high differentiation and technological complexity achieving high productivity and quality of the finished product.

Within the present scope, the term "production rate" of a building line or a work station indicates the time elapsing between the output of two consecutive products from the line or work station itself, in steady operating conditions.

Within the present scope, the term "steady operation" indicates the standard operating conditions of manufacture of the tyre, thus excluding any transitory periods of start up or stop of the plant itself.

The Applicant has found that providing a production process using a carcass structure building line, a crown structure building line, an assembling and shaping work station and a moulding and vulcanization line separate and associated with each other, where the carcass structure building line and the crown structure building line are synchronised in production rate with said assembling and shaping work station it is possible to obtain tyres with a high technological flexibility while maintaining high productivity as well.

More precisely, in accordance with a first aspect thereof, the invention relates to a process for producing tyres for vehicle wheels comprising the steps of:
a) building a carcass structure of a green tyre on a first forming drum in at least one carcass structure building line, said carcass structure comprising at least one carcass ply and a pair of annular anchoring structures;
b) building a crown structure of a green tyre on at least one second forming drum in at least one crown structure building line, said crown structure comprising at least one belt structure and a tread band;
c) toroidally shaping said carcass structure by assembling it to said crown structure in at least one assembling and shaping work station of the tyre being processed, said assembling and shaping work station being synchronised with said carcass structure building line and with said crown structure building line;
   wherein each carcass structure is associated with the respective first forming drum whereon it is built up to the end of step c) of shaping and assembling the tyre being processed;
d) moulding and vulcanizing the green shaped tyre in at least one tyre moulding and vulcanizing line separate from said assembling and shaping work station.

Since said process is compatible with the use of elementary semi-finished products differing for each tyre produced, without providing for any transfers of the carcass structure from the forming drum whereon it is built and considering such production rates as to synchronise the various operating steps, it allows obviating the aforementioned disadvantages of low technological flexibility, keeping high performance quality of the finished product and high productivity.

The process according to the present invention therefore is technologically flexible and efficient

In accordance with a second aspect thereof, the invention relates to a plant for producing tyres for vehicle wheels comprising:
- at least one carcass structure building line on a first forming drum, said carcass structure comprising at least one carcass ply and a pair of annular anchoring structures;
- at least one crown structure building line on at least one second forming drum, said crown structure comprising at least one belt structure and a tread band;
- at least one work station for assembling and shaping the tyre being processed suitable for shaping a carcass structure assembling it to said crown structure so as to obtain a green tyre, said assembling and shaping work station being operatively associated with said carcass structure building line and to said crown structure building line;
- at least one line for moulding and vulcanizing the assembled and shaped tyre separate from said assembling and shaping work station;
wherein said assembling and shaping work station is provided with shaping devices, associable to said first forming drum, suitable for performing the shaping of the carcass structure on said first forming drum.

Particular embodiments of the invention are the subject of the respective dependent claims.

Carrying out the above process, said plant achieves the same advantages mentioned above.

The Applicant has further noted that since the plant provides for a tyre moulding and shaping line separate from an assembling and shaping work station of the same, it allows overcoming also the aforementioned production drawbacks, in particular the problems related to the forming of a bottleneck between the different building lines and the moulding and vulcanization line.

The present invention, in at least one of the above aspects thereof, can present at least one of the following preferred features.

In a particularly preferred embodiment, said process provides that said carcass structure building line operates at a production rate equal to t1 said crown structure building line operates at a production rate equal to t2 and said assembling and shaping work station operates at a production rate equal to t wherein t1 and t2 are comprised in the range 0.9 t -1.3 t̅ in steady operation.

The Applicant has advantageously found that by the synchronisation expressed in the preferred solution illustrated above, the most complex and expensive portions of the plant, that is, the carcass structure building line and the crown structure building line can operate at steady condition at production rates close to the maximum capacity thereof, any stand-by times of the assembling and shaping work station in fact are not critical, within the limits of the provided solution, due to the smaller investment required by said work station, if compared with that of the above building lines.

Preferably, t1 and t2 are comprised in the range 0.93 t̅ 1.15 t̅.

More preferably, t1 and t2 are comprised in the range 0.97 t̅ -1.1 t̅.

Even more preferably t̅, t1 and t2 are substantially equal. In this way, in fact, none of the carcass structure building line, the crown structure building line and the assembling and shaping work station is forced to respect stand-by times, the accumulation of portions of tyres being processed is therefore avoided.

Advantageously, t̅ is comprised between 50 and 90 s, and preferably t̅ is comprised between 65 and 75 s.

According to a preferred embodiment, the process also comprises the step z) of picking up a first forming drum from a drum accumulating work station and placing it in said carcass structure building line. In this way it is possible to select, from said drum accumulating work station, the most appropriate drum for the tyre to be produced.

Preferably, step a) of building the carcass structure comprises sub-step a10) of applying at least one first portion of sidewalls of the tyre being processed in a first sidewall building work station of the carcass structure building line.

Preferably, step b) comprises sub-step b7) of building at least one second portion of sidewalls of the tyre being processed in a second sidewall building work station of the crown structure building line.

The possibility of splitting the sidewall building operation in two separate steps allows producing tyres having a construction scheme called "overlying sidewalls" (that is, tyres exhibiting sidewalls having the respective radially outer end edges overlapping the sidewall edges of the tread band) preventing the operation of turning up the sidewalls at the end of the building thereof on the forming drums. This possibility during building operations is highly remarkable if the sidewalls are to be built by winding side by side and/or overlapped coils of a continuous elongated element of elastomeric material: in fact in that case the turning operation would be very complex.

According to one embodiment, the step a) of building the carcass structure comprises the sub-step a1) of applying at least one bead reinforcing fabric in a position radially external to the first forming drum.

Preferably, said step a) also comprises the sequential sub-steps of:
a2) applying at least one first portion of an abrasion-proof element in a position radially external to said first forming drum;
a3) applying a liner layer in a position radially external to said first forming drum;
a4) applying a sub-liner layer in a position radially external to said liner;
a5) applying at least one first carcass ply in a position radially external to the sub-liner layer;
a6) applying a plurality of first intermediate elements at said at least one carcass ply.

Advantageously, step a) comprises, after sub-step a6), the further sub-step of:
a7) applying a plurality of internal reinforcing elements at said first intermediate elements.

In preferred embodiments, sub-step a7) is followed by the further sequential sub-steps of:
a8) applying at least one pair of annular anchoring structures to the axially opposite ends of said at least one carcass ply;
a9) applying at least one second portion of the abrasion-proof element;
a10) applying at least one first portion of sidewalls of the tyre being processed.

Advantageously, the step a) of building the carcass structure comprises, between sub-step a4) and sub-step a5) the sub-step of applying a layer of self-sealing material.

Advantageously, the step a) of building the carcass structure comprises, between sub-step a8) and sub-step a9) the sub-step of:
- applying a plurality of external reinforcing elements at the carcass plies. Advantageously, the step a) of building the carcass structure comprises, between sub-step a8) and sub-step a9) the sub-step of:
- applying an external ply at the carcass plies.

In some tyre sizes the external ply is alternative to the external reinforcing elements and is laid after turning the ply/plies around the annular anchoring structures, generally providing a width equal to the distance between the right and left ply flaps increased by about 40-60 mm according to the tyre sizes (20-30 mm of overlapping on each flap). Since the external ply provides greater consistency to the region comprised between the bead end and the beginning of the sidewall, it increases the tyre stiffness, increasing the handiness of the same and the driving reactivity accordingly.

According to a preferred embodiment, sub-step a8) of application of the annular reinforcing structures comprises the following sub-steps:
a8') placing the annular reinforcing structures at the axially opposite ends of said at least one carcass ply; and
a8") folding the ends of said at least one carcass ply onto the plies themselves so as to form flaps that contain said annular anchoring structures.

Preferably, sub-step a8) of applying the annular anchoring structures is preceded by a step j) of transferring bead cores suitable for forming said annular anchoring structures from a bead core storage work station operatively associated with the annular anchoring structures applying work station of the carcass structure building line.

Advantageously, the step a) of building the carcass structure comprises, before sub-step a9) of application of the second portion of the abrasion-proof element, the sub-step of:
a9') transferring the first forming drum into a carcass structure completing unit comprising a second abrasion-proof application work station and a first sidewall building work station.

Preferably, said sub-step a9') of transferring the first forming drum in the carcass structure completing unit is carried out by a robotized arm.

According to a preferred embodiment, step b) of building the crown structure comprises the sub-step of:
b1) applying an under-belt layer in a position radially external to the second forming drum.

Preferably, said step b) also comprises the sequential sub-steps of:
b2) applying at least one first belt strip in a position radially external to said second forming drum;
b4) applying a second belt strip in a position radially external to said first belt strip;
b5) applying at least one first layer of textile or metal cords, arranged circumferentially in a position radially external to the radially external belt strip, and applied at least onet the axially external portions thereof;
b6) applying at least one tread band in a position radially external to said cord layer.

Said step b) preferably comprises between step b2) and step b4), a step b3) of applying at least one second intermediate element on the first belt strip.

Said step b) preferably comprises, after step b6), a step b7) of applying at least one second portion of sidewalls of the tyre being processed in a position radially external to said tread band.

Advantageously, said sub-step b6) is carried out in at least two tread band building work stations.

Preferably, said step b) of building the crown structure comprises, after sub-step b4), the sub-step of transferring the partially built crown structure from said second forming drum whereon it is partially built to a third forming drum into a crown structure transferring work station of the crown structure building line. In this way it is possible to start the shaping of the crown structure by the use of an appropriate third forming drum.

Advantageously, said sub-step b4) comprises the application of a third belt strip in a position radially external to the second belt strip.

According to a preferred embodiment, the step b) of building the crown structure comprises, before the sub-step of transferring the crown structure, the sub-step of turning the ends of the first belt strip on the second belt strip.

According to a further preferred embodiment, the step b) of building the crown structure comprises, before the sub-step of transferring the crown structure, the sub-step of turning the ends of the first belt strip on the second belt strip and on the third belt strip.

Preferably, step b) of building the crown structure comprises, before sub-step b6) of building the tread band, the sub-step of applying at least one sub-layer on the cord layer applied before.

Preferably, said sub-step b6) comprises the application of two layers of tread band.

According to a preferred embodiment, the process for producing tyres comprises, before step d), the step e) of transferring the shaped green tyre into a green tyre storing work stations, operatively associated with the assembling and shaping work station. In this way it is possible to make up for any synchronism problems due to failures of an apparatus.

Even more preferably, said step e) is followed by a step f) of transferring the green tyre to the tyre moulding and vulcanization line.

The step c) of shaping and assembling the green tyre may comprise the following sub-step:
c1) transferring the crown structure from the second forming drum whereon it has been built in a position radially external to the carcass structure associated with the first forming drum.

As an alternative, the step c) of shaping and assembling the green tyre comprises the following sub-step:
c1') transferring the crown structure from the third forming drum whereon it has been built in a position radially external to the carcass structure associated with the first forming drum.

The production process preferably comprises, after the step a) of building the carcass structure of the green tyre, a step a') of transferring and storing the built carcass structure into a work station for storing carcass structures, arranged externally to the carcass structure building line.

As an alternative, the production process comprises, after the step a) of building the carcass structure of the green tyre, a step a") of transferring and storing the built carcass structure into the drum accumulating work station.

According to a preferred embodiment, the tyre production process comprises, after the step b) of building the crown structure of the green tyre, a step b') of transferring and storing the built crown structure into a crown structure storing work stations.

Preferably, the process comprises the pre-step g) of supplying elementary semi-finished products to the respective work stations.

Even more preferably, the process comprises the additional step h) of preparing elementary semi-finished products in a semi-finished product preparation line of the production plant itself. In this way it is possible to synchronise also the production of semi-finished products with the various steps of the production process, optimising the production process, preventing the production of processing scraps.

The production process may further comprise the step i) of adjusting the dimensions of at least one between the first forming drum, the second forming drum and the third forming drum.

Preferably, said step i), comprises the axial adjustment of the first forming drum.

Even more preferably, said step i), comprises the radial adjustment of the second forming drum. This allows the production of a large variety of tyres using few types of drums.

Advantageously, the first forming drum is transferred from a work station of the carcass structure building line to the next work station by a carriage moving on a travel line.

Advantageously, the second forming drum is transferred from a work station of the crown structure building line to the next work station by at least one robotized arm.

In a preferred solution, said third forming drum is transferred from a work station of the crown structure building line to the next work station by at least one robotized arm.

Preferably, at least one of sub-steps a1) - a10) is preceded by a step of transferring the first forming drum into the drum accumulating work station. By transiting the drum in such work stations it is in fact possible to make up for any failures or changes of the production requirements.

According to a preferred embodiment, the assembling and shaping work station of the production plant is provided with devices suitable for transferring the second forming drum in the crown structure building line, after the crown structure has been removed therefrom.

As an alternative, said assembling and shaping work station is further provided with transfer devices suitable for transferring a third forming drum in the crown structure building line, after the crown structure has been removed therefrom.

In this way, the second/third forming drum is ready to start a new step b) of building the crown structure.

Preferably, said assembling and shaping devices are pneumatic devices.

In a preferred solution, said assembling and shaping devices are mechanical devices.

Advantageously, the tyre production plant comprises a drum accumulating work station provided with devices for transferring a first forming drum to the carcass structure building line. This work station acts also as a buffer for the production cycle, with the clear advantages thereof.

The carcass structure building line preferably comprises a first sidewall building work station provided with devices for applying at least one first portion of sidewalls of the tyre being processed.

Advantageously, the crown structure building line comprises a second sidewall building work station provided with devices for applying at least one second portion of sidewalls of the tyre being processed.

According to a preferred embodiment, the carcass structure building line comprises at least two of the following work stations operatively arranged in line:
- a work station for applying a reinforcing fabric provided with devices for applying at least one bead reinforcing fabric on a first forming drum;
- a first abrasion-proof application work station provided with devices for applying at least one first portion of an abrasion-proof element in a position radially external to said first forming drum;
- a liner application work station provided with devices for applying a liner layer in a position radially external to said first forming drum;
- a sub-liner application work station provided with devices for applying a sub-liner layer in a position radially external to said liner;
- a ply application work station provided with devices for applying at least one first carcass ply in a position radially external to the sub-liner layer,
- a work station for applying first intermediate elements provided with devices for applying a plurality of first intermediate elements at said at least one carcass ply;
- an internal reinforcing elements application work station provided with devices for applying a plurality of internal reinforcing elements at said first intermediate elements;
- a annular anchoring structures applying work station provided with devices for applying at least one pair of annular anchoring structures to the axially opposite ends of said at least one carcass ply;
- a second abrasion-proof application work station provided with devices for applying at least one second portion of the abrasion-proof element;
- a first sidewall building work station provided with devices for applying at least one first portion of sidewalls of the tyre being processed.

It is noted that in the present description and in the following claims, the expression "work stations operatively arranged in line", indicates work stations operatively connected in sequence, independently from the plant lay-out, that is, independently from the relative position thereof.

Preferably, the carcass structure building line also comprises a work station for applying self-sealing material provided with devices for applying a layer of self-sealing material in a position radially external to the sub-liner layer, said work station for applying self-sealing material being arranged downstream the sub-liner application work station.

Advantageously, the work station for applying intermediate elements, the work station for applying internal reinforcing elements and the annular anchoring structures applying work station are integrated in an integrated unit of the carcass structure building line.

According to a preferred embodiment, the carcass structure building line comprises also a external reinforcing elements applying work station provided with devices for applying, at the turned ends of said at least one carcass ply, a plurality of external reinforcing elements, which is arranged downstream the annular anchoring structures applying work station.

Preferably, said external reinforcing elements applying work station is integrated in said integrated unit of the carcass structure building line.

According to an alternative embodiment, the carcass structure building line comprises, a work station for applying an external ply provided with devices for applying an external ply overlapping the two ends of said at least one turned ply, which is arranged downstream the annular anchoring structures applying work station.

Preferably, said work station for applying external ply is integrated in said integrated unit of the carcass structure building line.

Advantageously, said annular anchoring structures applying work station of the carcass structure building line is also provided with devices for folding the ends of said at least one carcass ply on said at least one ply, so as to form flaps that contain said annular anchoring structures.

Preferably, the tyre production plant further comprises a bead core storing work stations suitable for forming the annular anchoring structures of the tyre being processed, which is operatively associated with the annular anchoring structures applying work station.

According to a preferred embodiment, the second abrasion-proof application work station and the first sidewall building work station are comprised in a carcass structure completing unit.

Preferably, said carcass structure completing unit comprises devices for transferring the first forming drum from the carcass structure building line into the completion unit itself

Preferably, said devices for transferring the first forming drum in the carcass structure completing unit comprise a robotized arm.

Preferably, the crown structure building line comprises a work station for applying an under-belt layer provided with devices for applying an under-belt layer on a second forming drum.

Even more preferably, said crown structure building line comprises the following work stations operatively arranged in line:
- a first belt applying work station provided with devices for applying at least one first belt strip in a position radially external to said second forming drum;
- a second belt applying work station provided with devices for applying a second belt strip in a position radially external to said first belt strip;
- a cord application work station provided with devices for applying at least one first layer of cords, arranged circumferentially on the radially external belt strip, applied at least at the axially external portions thereof;
- at least one tread band assembling work station provided with devices for applying at least one tread band in a position radially external to said cord layer.

In a preferred solution said crown structure building line comprises a second intermediate elements laying work station provided with devices for laying at least one second intermediate element on the first belt structure.

In a further preferred solution, said crown structure building line comprises a second sidewall building work station provided with devices for building at least one second portion of sidewalls in a position axially external to the tread band.

According to a preferred embodiment, the crown structure building line comprises:
- a first unit for the partial building of the crown structure wherein the crown structure is partially built on the second forming drum and comprises at least one under-belt layer application work station, a first belt application work station and a second belt application work station;
- a second unit for the partial building of the crown structure wherein the crown structure is completed on a third forming drum, geometrically different from the second forming drum, and comprises at least one cord application work station, at least two tread band building work stations and a second sidewall building work station;
- a crown structure transferring work station from the second forming drum of the first unit for partially building the crown structure to the third forming drum of the second unit for partially building the crown structure.

Preferably, said first unit for partial building the crown structure comprises a work station for applying intermediate elements.

The second belt applying work station may also be provided with devices for applying a third belt strip in a position radially external to said second belt strip.

Preferably, the crown structure transferring work station may also comprise devices for turning the ends of the first belt strip on the second belt strip.

In a different embodiment, the crown structure transferring work station may also comprise devices for turning the ends of the first belt strip on the second strip and on the third belt strip.

Preferably, the crown structure building line comprises, downstream the cord application work station, a sub-layer application work station provided with devices for applying at least one sub-layer in a position radially external to the cord layer.

Advantageously, the plant comprises a green tyre storing work stations operatively associated with the assembling and shaping work station.

Preferably, said green tyre storing work stations is operatively associated also with the tyre moulding and vulcanization line.

According to a preferred embodiment, said green tyre storing work stations is provided with devices for transferring the green tyre to the moulding and vulcanization line.

Advantageously, the production plant is provided with devices for transferring the green tyre from the assembling and shaping work station to the green tyre storage work station.

Preferably, said devices for transferring the green tyre from the assembling and shaping work station to the green tyre storage work station comprise a robotized arm.

Preferably, the green tyre assembling and shaping work station comprises:
- at least one stand-by position of the second forming drum or of the third forming drum; and
- devices for transferring the crown structure for transferring it to a position radially external to the carcass structure associated with the first forming drum.

The plant may comprise a carcass structure accumulation work station arranged externally to the carcass structure building line.

As an alternative, the carcass structure storage work station may coincide with the drum accumulating work station of the carcass structure building line.

As an alternative or in addition, the plant may comprise a crown structure storing work stations.

Advantageously, at least one between the ply application work station, the first belt application work station, the second belt application work station and the cord application work station is operatively associated with at least one unit for supplying elementary semi-finished products in the respective work stations.

According to one embodiment, the plant comprises a line for preparing elementary semi-finished products suitable for being supplied in at least one between the carcass structure building line and the crown structure building line.

Advantageously, the production plant comprises devices for adjusting the dimensions of at least one between the first forming drum, the second forming drum and the third forming drum. In this way, in fact, it is possible to use few types of drums for producing a great variety of tyres.

According to a preferred embodiment, the first forming drum is adjustable in axial direction. The axial dimension thereof can therefore be changed on the basis of the development of the ply/plies between the bead cores once the tyre is vulcanized.

Preferably, the second forming drum is adjustable in radial direction. The radial dimension thereof may be varied on the basis of the rim diameter required of the tyre to be produced.

Preferably, the third forming drum comprises a convex forming surface. In this way it is possible to form the crown structure before it is associated with the carcass structure.

The carcass structure building line is preferably provided with devices for transferring the first forming drum from a work station of the same carcass structure building line to the next work station.

Preferably, said devices for transferring the first forming drum from a work station of the carcass structure building line to the next work station comprise a carriage moving on a travel line.

Likewise, the crown structure building line is preferably provided with devices for transferring the second forming drum from a work station of the same crown structure building line to the next work station.

Preferably, said devices for transferring the second forming drum from a work station of the crown structure building line to the next work station comprise at least one robotized arm.

In a preferred solution, the crown structure building line is advantageously provided with devices for transferring the third forming drum from a work station of the second unit for partially building the crown structure to the next work station.

Advantageously, the moulding and vulcanization line of the shaped green tyre comprises at least two vulcanizing units, each provided with at least one vulcanizing die.

In a preferred solution, said vulcanizing units are ten, each comprising two vulcanizing dies.

In a different preferred solution, said vulcanizing units are five, each comprising two vulcanizing dies.

Further features and advantages of the invention will appear more clearly from the following description of some preferred examples of production plants and processes according to the invention, made by way of an indicative non-limiting example with reference to the annexed drawings, wherein:
- figure 1 shows a schematic layout of a plant for producing tyres for vehicle wheels wherein the process according to a first embodiment of the present invention is carried out; and
- figure 2 shows a schematic layout of a plant for producing tyres for vehicle wheels wherein the process according to a second embodiment of the present invention is carried out.

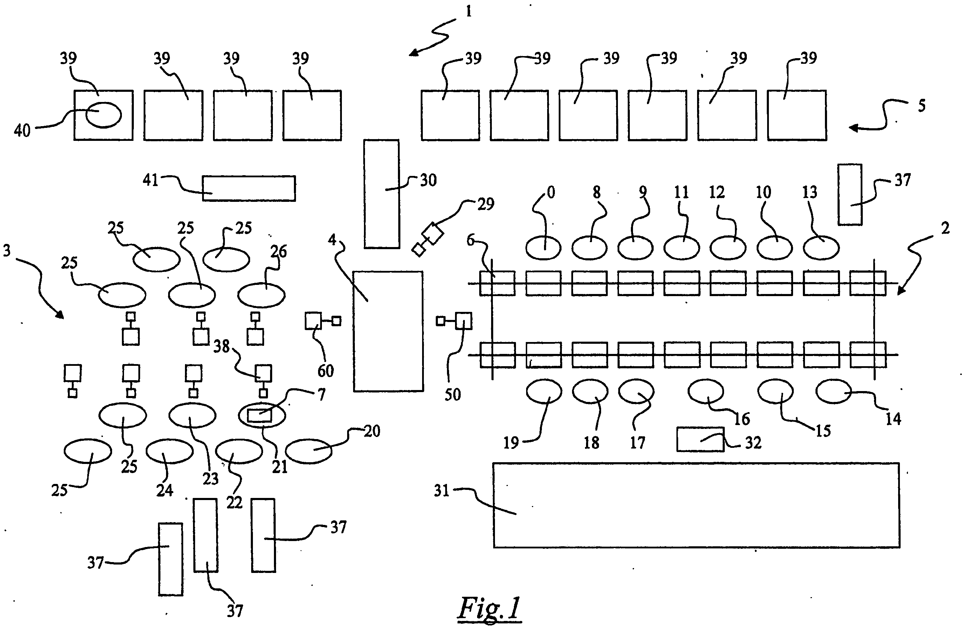

With reference to figure 1, reference numeral 1 generally indicates a plant for producing tyres for vehicle wheels according to a first embodiment of the present invention.

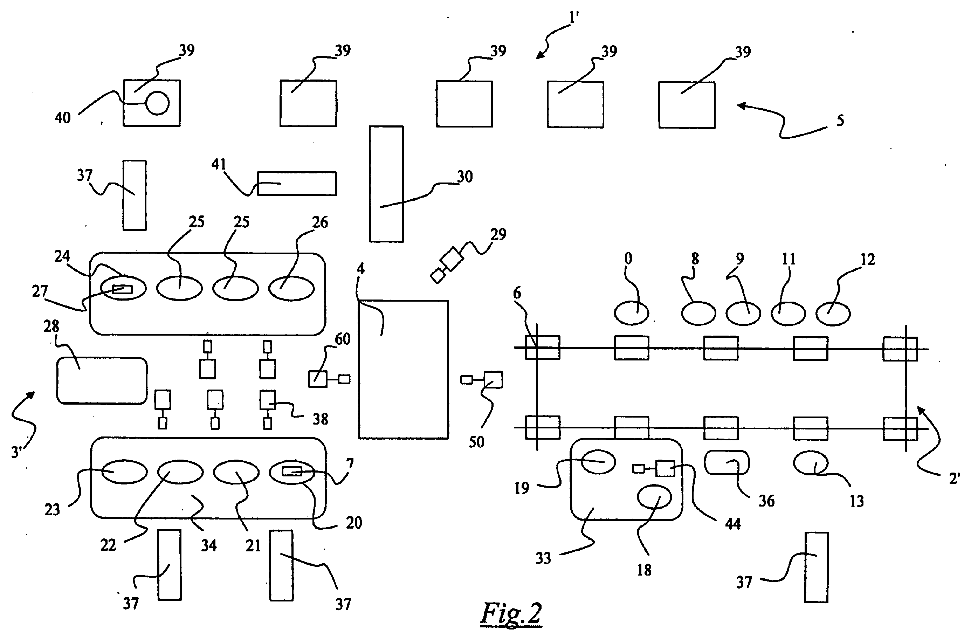

With reference to figure 2, reference numeral 1' generally indicates the plant for producing tyres for vehicle wheels according to a second embodiment of the present invention.

Plant 1, 1' comprises at least one carcass structure building line 2, 2' wherein a carcass structure, comprising at least one carcass ply and a pair of annular anchoring structures, is built on at least one first forming drum 6.

Such plant 1, 1' further comprises at least one crown structure building line 3, 3' wherein a crown structure, comprising at least one belt structure and as tread band, is built on at least one second forming drum 7.

Plant 1, 1' is further provided with at least one assembling and shaping work station 4 of the tyre being processed operatively associated with said carcass structure building line 2, 2' and to said crown structure building line 3, 3'. Such assembling and shaping work station 4 is suitable for shaping a carcass structure by assembling it to a crown structure so as to obtain a green tyre.

According to a preferred embodiment of the invention, the carcass structure building line 2, 2', is provided with moving systems for transferring the carcass structure and the first forming drum 6 whereon this has been built from said carcass structure building line 2, 2', to said assembling and shaping line 4. Preferably such moving systems comprise at least one robotized arm 50.

According to a preferred embodiment of the invention, the crown structure building line 3, 3', is provided with moving systems for transferring the crown structure and the second/third forming drum 7/27 from said crown structure building line 3, 3', to said assembling and shaping line 4. Preferably such moving systems comprise at least one robotized arm 60.

The assembling and shaping work station 4 is provided with shaping devices, associable to said first forming drum 6, which are suitable for performing the shaping of the carcass structure on the first forming drum 6.

Such shaping devices are preferably pneumatic or mechanical devices.

Plant 1, 1' further comprises at least one moulding and vulcanization line 5 of the assembled and shaped tyre wherefrom the finished product is obtained.

The assembling and shaping work station 4 is provided with transfer devices for transferring the second forming drum 7 or a third forming drum 27 (that will be better illustrated hereinafter) from such work station to the crown structure building line 3 or 3', after the crown structure has been removed therefrom to be associated with the carcass structure.

The production plant 1, 1' further comprises a drum accumulating work station 0 wherein drums that may be of a different type are stored. Such work station is provided with devices for transferring a first forming drum 6 to the carcass structure building line 2, 2'.

The carcass structure building line 2, 2' comprises a first sidewall building work station 19 provided with devices for applying at least one first portion of sidewalls of the tyre being processed.

The application of at least one second portion of sidewalls of the tyre being processed is provided in a second sidewall building work station 26 of the crown structure building line 3, 3' by special devices.

The carcass structure building line 2, 2' comprises at least two of the following work stations:
- a work station for applying a reinforcing fabric 8 provided with devices for applying at least one bead reinforcing fabric on a first forming drum 6;
- a first abrasion-proof application work station 9 provided with devices for applying at least one first portion of an abrasion-proof element in a position radially external to said first forming drum 6;
- a liner application work station 11 provided with devices for applying a liner layer in a position radially external to said first forming drum 6;
- a sub-liner application work station 12 provided with devices for applying a sub-liner layer in a position radially external to said liner,
- a ply application work station 13 provided with devices for applying at least one first carcass ply in a position radially external to the sub-liner layer;
- a work station for applying first intermediate elements 14 provided with devices for applying a plurality of first intermediate elements at the carcass plies;
- an internal reinforcing element application work station 15 provided with devices for applying a plurality of internal reinforcing elements at said first intermediate elements;
- a annular anchoring structures applying work station 16 provided with devices for applying at least one pair of annular anchoring structures to the axially opposite ends of said at least one carcass ply;
- a second abrasion-proof application work station 18 provided with devices for applying at least one second portion of the abrasion-proof element;
- a first sidewall building work station 19 provided with devices for applying at least one first portion of sidewalls of the tyre being processed.

Advantageously, the above first intermediate elements are applied by winding side by side and/or overlapped coils of a continuous elongated element of elastomeric material. The presence of elastomeric material between the textile cords of the carcass ply/plies and the above internal reinforcing elements exhibiting metal cords (having sharp edges due to the angled laying thereof), prevents contact between the latter and the carcass ply itself preventing the possible onset of cracks in the tyre operation.

In both embodiments of the present invention shown in the figures, the carcass structure building line 2, 2' comprises each of the above work stations. The latter are sequentially arranged along two parallel travels run by the first forming drum 6 in opposite directions.

In particular, in the second embodiment shown in figure 2, the work station for applying intermediate elements 14, the work station for applying internal reinforcing elements 15 and the annular anchoring structures applying work station 16 are integrated in an integrated unit 36.

The carcass structure building line 2 of the production plant 1, according to the first embodiment of the invention, beside the above work stations comprises also a work station for applying self-sealing material 10 provided with devices for applying a layer of self-sealing material in a position radially external to said sub-liner layer. As can be seen in figure 1, said work station for applying self-sealing material 10 is arranged downstream the first sub-liner application work station 12.

The carcass structure building line 2, 2' may also comprise a external reinforcing elements applying work station 17 which is provided with devices for applying a plurality of external reinforcing elements at the carcass plies. Such external reinforcing elements applying work station 17 is arranged downstream the annular anchoring structures applying work station 16.

In the second embodiment, said external reinforcing elements applying work station 17 is integrated in the integrated unit 36 of the carcass structure building line 2'.

According to an alternative embodiment, not shown in the figures, the carcass structure building line 2, 2' comprises, alternatively to said external reinforcing elements applying work station 17, a work station for applying an external ply which is provided with devices for applying an external ply at the carcass ply/plies. Such work station for applying an external ply is arranged downstream the annular anchoring structures applying work station 16.

Similarly to the external reinforcing elements applying work station 17, such work station may be integrated in said integrated unit 36 of the carcass structure building line 2'.

The annular anchoring structures applying work station 16 of the carcass structure building line 2, 2' is also provided with devices for folding the ends of the carcass plies on the plies themselves, so as to form flaps that contain said annular anchoring structures.

According to the first embodiment, the production plant 1 further comprises a bead core storing work stations 32 suitable for forming the annular anchoring structures of the tyre being processed. Such bead core storing work stations 32 is operatively associated with the annular anchoring structures applying work station 16 and arranged in the proximity thereof.

As shown in figure 2, said second abrasion-proof application work station 18 and said first sidewall building work station 19 are comprised in a carcass structure completing unit 33.

The latter also comprises devices for transferring the first forming drum 6 from the carcass structure building line 2' into the completion unit 33 itself. In other words, such transfer devices pick up the first forming drum 6 from one of the above travel lines for transferring it to the completion unit 33 where the carcass structure is completed.

Said devices for transferring the first forming drum 6 in the carcass structure completing unit 33 comprise a robotized arm 44.

The latter is also suitable for transferring the first forming drum 6 to the travel line once the carcass structure has been completed.

The crown structure building line 3, 3' according to the present invention comprises a work station for applying an under-belt layer 20 provided with devices for applying an under-belt layer on the second forming drum 7.

Said crown structure building line 3, 3' may further comprise the following work stations operatively arranged in line:
- a first belt applying work station 21 provided with devices for applying at least one first belt strip in a position radially external to said second forming drum;
- a second intermediate elements laying work station 22 provided with devices for laying at least one second intermediate element on the first belt structure;
- a second belt applying work station 23 provided with devices for applying a second belt strip in a position radially external to said first belt strip;
- a cord application work station 24 provided with devices for applying at least one first layer of cords, arranged circumferentially on the radially external belt strip, applied at least at the axially external portions thereof;
- at least one tread band assembling work station 25 provided with devices for applying at least one tread band in a position radially external to said cord layer,
- a second sidewall building work station 26 provided with devices for building at least one second portion of sidewalls in a position axially external to the tread band.

Advantageously, the above second intermediate elements are applied by winding side by side and/or overlapped coils of a continuous elongated element of elastomeric material. The presence of elastomeric material covering the axial ends of at least two overlapped belt strips may be useful in tyres for very high performance vehicles, since it prevents the onset of cracks at the axial ends of the belts that could generate due to the considerable efforts a tyre of this type is subject to.

In the embodiment of the present invention illustrated in figure 1, the crown structure building line 3 comprises each of the work stations, which are sequentially arranged so as to form a loop crossed by the second forming drum 7, preferably in clockwise direction.

According to the embodiment shown in figure 2, the crown structure building line 3' comprises:
- a first unit 34 for the partial building of the crown structure, wherein the crown structure is partially built on the second forming drum 7, comprising an under-belt layer application work station 20, a first belt application work station 21, an intermediate element laying work station 22 and a second belt application work station 23;
- a second unit 35 for the partial building of the crown structure, wherein the crown structure is completed on a third forming drum 27, geometrically different from the second forming drum 7, comprising a cord application work station 24, at least two tread band assembling work stations 25 and a second sidewall building work station 26;
- a crown structure transferring work station 28 from the second forming drum 7 of the first unit 34 for partially building the crown structure to the third forming drum 27 of the second unit 35 for partially building the crown structure.

The crown structure transferring work station 28 is arranged between the first unit 34 for the partial building of the crown structure and second unit 35 for the partial building of the crown structure.

The third forming drum 27 comprises a convex forming surface. In other words, the forming surface is not flat, but curved so as to shape the crown structure.

The second belt applying work station 23 of the crown structure building line 3, 3' is also provided with devices for applying a third belt strip in a position radially external to said second belt strip.

The crown structure transferring work station 28 also comprises devices for turning the ends of the first belt strip on the second belt strip or of the first belt strip on the second and third belt strip.

The crown structure building line 3, 3' comprises, downstream the cord application work station 24, a sub-layer application work station provided with devices for applying at least one sub-layer of the tread band in a position radially external to the cord layer.

The crown structure building line 3, according to one embodiment illustrated in figure 1, preferably comprises six work stations for building a tread band 25.

The production plant 1, 1', according to the present invention, comprises a green tyre storing work station 30 operatively associated with the assembling and shaping work station 4 and to the moulding and vulcanization line 5 of the tyre.

Said green tyre storing work stations 30 is arranged between the assembling and shaping work station 4 and the moulding and vulcanization line 5 and is provided with devices for transferring the green tyre to the moulding and vulcanization line 5.

Plant 1, 1' comprises devices for transferring the green tyre from the assembling and shaping work station 4 to the green tyre storage work station 30, preferably the above devices comprise a robotized arm 29.

The green tyre assembling and shaping work station 4 comprises:
- at least one stand-by position of the second forming drum 7 or of the third forming drum 27;
- devices for transferring the crown structure for transferring it to a position radially external to the carcass structure associated with the first forming drum 6.

Plant 1, 1', according to one embodiment of the invention not shown in the figures, comprises a work station for storing carcass structures positioned externally to the carcass structure building line.

As an alternative, the carcass structure storage work station may coincide with the drum accumulating work station 0 of the carcass structure building line 2, 2'.

Likewise, plant 1, 1' comprises a crown structure storing work stations 41.

At least one between the ply application work station 13, the first belt application work station 21, the second belt application work station 23 and the cord application work station 24 is operatively associated with at least one unit for supplying elementary semi-finished products 37 in the respective work stations.

In both embodiments shown in the figures, all of the above work stations are operatively associated with and arranged close to respective units for supplying elementary semi-finished products 37.

The elementary semi-finished products preferably comprise continuous elongated elements of elastomeric material, strips of elastomeric material generally called "strip-like elements" containing two or more textile or metal cords, single rubber metal cords, therein.

In the work stations illustrated above, the above elementary semi-finished products may be wound by side by side and/or overlapped coils, for example in the case of continuous elongated elements that contribute to the forming of liners, sub-liners, sub-layers, fillers in the bead zone, sidewalls, tread band, or in the case of single rubber metal cord that contributes to the forming of bead cores or of the cord layer at zero degrees in the belt structure. As an alternative, such semi-finished products may be laid reciprocally side by side, especially in the case of strip-like elements that for example contribute to forming carcass plies, belt strips, and some types of reinforcing elements.

As shown in figure 1, the plant according to the invention may comprise a line for preparing elementary semi-finished products 31 suitable for being supplied in at least one between the carcass structure building line 2 and the crown structure building line 3.

The plant 1, 1' for producing tyres comprises devices for adjusting the shape and/or the dimensions of at least one between the first forming drum 6, the second forming drum 7 and the third forming drum 27.

According to preferred embodiments, the first forming drum 6 is adjustable in axial direction and the second forming drum 7 is adjustable in radial direction.

The carcass structure building line 2, 2' is preferably provided with devices for transferring the first forming drum 6 from a work station of the same carcass structure building line 2, 2' to the next work station which preferably comprise a carriage moving on a travel line. Such carriage moves on the travel lines stopping at work stations wherein the tyre must be processed.

Likewise, the crown structure building line 3, 3' is provided with devices for transferring the second forming drum 7 from a work station of the same crown structure building line 3, 3' to the next work station. These devices preferably comprise at least one robotized arm 38. The latter picks up the drum from a work station and carries it into the next work station.

According to the second embodiment, the crown structure building line 3' is provided with devices for transferring the third forming drum 27 from a work station of the second unit 35 for partially building the crown structure to the next work station which preferably comprise at least one robotized arm 38.

According to the present invention, the moulding and vulcanization line 5 of the shaped green tyre comprises at least two vulcanizing units 39. Each of said vulcanizing units 39 comprises at least one vulcanizing die 40 wherein a tyre is moulded and vulcanized in a known manner.

In production plant 1, according to one embodiment of the invention, said vulcanizing units 39 are ten. Each vulcanizing unit 39 comprises two vulcanizing dies 40.

In production plant 1', according to a different embodiment of the invention, said vulcanizing units 39 are five. Each vulcanizing unit 39 comprises two vulcanizing dies 40.

With reference to the production plant 1, 1' illustrated in figures 1 and 2, two preferred embodiments of a production process according to the invention shall now be described.

According to a step a), a carcass structure of a green tyre, comprising at least one carcass ply and a pair of annular anchoring structures, is built on a first forming drum 6 in at least one carcass structure building line 2. The robotized arm 50 carries the carcass structure built and associated with the forming drum 6 thereof to the assembling and shaping line 4. Said carcass structure building line 2, according to the invention, works at a production rate equal to t1.

According to a step b), a crown structure of a green tyre, comprising at least one belt structure and a tread band, is built on at least one second forming drum 7 in at least one crown structure building line 3. The robotized arm 60 carries the crown structure built and associated with the forming drum 7 thereof to the assembling and shaping line 4. Said crown structure building line 3, according to the invention, works at a production rate equal to t2.

The process according to the invention, according to a step c), provides the toroidal shaping of said carcass structure for building it to said crown structure, in at least one assembling and shaping line 4 of the tyre being processed, which is operatively associated with said carcass structure building line 2 and to said crown structure building line 3. Said assembling and shaping work station 4, according to the invention, works at a production rate equal to t̅.

The production process finally provides a step d) of moulding and vulcanizing the shaped green tyre in at least one tyre moulding and vulcanisation line 5.

According to the invention, each carcass structure is associated with the respective first forming drum 6 whereon it is built up to the end of step c) of shaping and assembling of the tyre being processed and, in steady operation, t1 and t2 are comprised in the range 0.9t̅ - 1.3t̅.

According to a preferred embodiment of the invention, t1 and t2 are comprised in the range 0.93t̅- 1.15t̅.

Even more preferably, t1 and t2 are comprised in the range 0.97 t̅ -1.1 t̅.

The case wherein t̅, t1 and t2 are substantially equal, that is, when t1 and t2 are comprised in the range 0.99t̅ - 1.01t̅, is particularly preferred.

According to preferred embodiments, t̅ is comprised between 60 and 80 s and more preferably, t̅ is comprised between 65 and 75 s.

For example, if t̅ = 70, t1 and t2 are comprised between 63 and 91 s. More preferably, t1 and t2 are comprised between 65.1 and 80.5 s, and even more preferably t1 and t2 are comprised between 67.9 and 77 s, which allows optimum management of the process for producing tyres according to the invention. In this way, in fact, considerable stand-by time from the production point of view are not provided.

According to preferred embodiments, the process also comprises the step z) of picking up a first forming drum 6 from a drum accumulating work station 0 and placing it in said carcass structure building line 2.

Step a) of building the carcass structure comprises sub-step a10) of applying at least one first portion of sidewalls of the tyre being processed in a first sidewall building work station 19 of the carcass structure building line 2.

Step b) comprises sub-step b7) of applying at least one second portion of sidewalls of the tyre being processed in a second sidewall building work station 26 of the crown structure building line 3.

Preferably, step a) also comprises sub-step a1) of applying at least one bead reinforcing fabric in a position radially external to the first forming drum 6.

According to preferred embodiments, said step a) of building the carcass structure may further comprise the sequential sub-steps of:
a2) applying at least one first portion of an abrasion-proof element in a position radially external to said first forming drum 6;
a3) applying a liner layer in a position radially external to said first forming drum 6;
a4) applying a sub-liner layer in a position radially external to said liner;
a5) applying at least one first carcass ply in a position radially external to the sub-liner layer;
a6) applying a plurality of first intermediate elements at the carcass ply/plies.

Step a) comprises, after sub-step a6), the further sub-step a7) of applying a plurality of internal reinforcing elements as said intermediate elements.

Afterwards, the further sequential sub-steps may be provided:
a8) applying at least one pair of annular anchoring structures to the axially opposite ends of the carcass ply/plies;
a9) applying at least one second portion of the abrasion-proof element;
a10) applying at least one first portion of sidewalls of the tyre being processed.

According to the embodiment of the invention carried out in plant 1 of figure 1, step a) of building the carcass structure comprises, between sub-step a4) and sub-step a5), the sub-step of:
- applying a layer of self-sealing material.

According to preferred embodiments of the process of the invention, step a) of building the carcass structure comprises, between sub-step a8) and sub-step a9), the sub-step of applying a plurality of external reinforcing elements at the carcass ply/plies.

Such sub-step may be replaced by the sub-step of applying an external ply at the carcass ply/plies.

Sub-step a8) of application of the annular reinforcing structures comprises the following sub-steps:
a8') placing the annular reinforcing structures at the axially opposite ends of the carcass ply/plies; and
a8") folding the ends of the carcass ply/plies onto the plies themselves so as to form flaps that contain said annular anchoring structures.

The same sub-step a8) is preferably preceded by a step j) of transferring bead cores suitable for forming said annular anchoring structures from a bead core storage work station 32 operatively associated with the annular anchoring structures applying work station 16 of the carcass structure building line 2.

Step a) of building the carcass structure may comprise, before sub-step a9) of applying the second portion of the abrasion-proof element, sub-step a9') of transferring the first forming drum 6 into a carcass structure completing unit 33 comprising a second abrasion-proof application work station 18 and a first sidewall building work station 19, as shown in figure 2.

Said sub-step a9') of transferring the first forming drum 6 into the carcass structure completing unit 33 is preferably carried out by a robotized arm 44.

According to preferred embodiments of the process of the invention, step b) of building the crown structure comprises sub-step b1) of applying an under-belt layer in a position radially external to the second forming drum 7.

Step b) may also comprise the further sequential sub-steps of:
b2) applying at least one first belt strip in a position radially external to said second forming drum;
b3) laying at least one second intermediate element on the first belt structure;
b4) applying a second belt strip in a position radially external to said first belt strip;
b5) applying at least one first layer of textile or metal cords, arranged circumferentially in a position radially external to the radially external belt strip, and applied at least at the axially external portions thereof;
b6) applying at least one tread band in a position radially external to said cord layer,
b7) applying at least one second portion of sidewalls of the tyre being processed in a position axially external to said tread band.

Sub-step b6) is preferably carried out in at least two tread band assembling work stations 25. In particular, in the embodiment of the process of the invention, carried out in plant 1 of figure 1, such sub-step b6) is carried out in six tread band assembling work stations 25, whereas in a different embodiment, carried out in plant 1' of figure 2, such sub-step b6) is carried out in two tread band assembling work stations 25.

According to said different embodiment illustrated in figure 2, step b) of building the crown structure comprises, after sub-step b4), the sub-step of transferring the partially built crown structure from said second forming drum 7 whereon it is partially built to a third forming drum 27, into a crown structure transferring work station 28 of the crown structure building line 3'.

Sub-step b4), according to a preferred embodiment, comprises the application of a third belt strip in a position radially external to the second belt strip. In that case, said step b) of building the crown structure comprises, before the sub-step of transferring the partially built crown structure, the sub-step of turning the ends of the first belt strip on the second belt strip or of the first belt strip on the second and on the third belt strip.

Step b) of building the crown structure comprises, before sub-step b6) of building the tread band, the sub-step of applying at least one sub-layer of the tread band on the cord layer applied before.

In such solution, said sub-step b6) comprises the application of two layers of tread band.

Before step d), according to preferred embodiments, the process comprises the step e) of transferring the shaped green tyre into a green tyre storing work stations 30 operatively associated with the assembling and shaping work station 4.

After such step e), a step f) of transferring the shaped green tyre to the tyre moulding and vulcanization line 5 is provided.

The step c) of shaping and assembling the green tyre comprises the sub-step c1) of transferring the crown structure from the second/third forming drum 7/27 whereon it has been built in a position radially external to the carcass structure associated with the first forming drum 6.

After the step a) of building the carcass structure of the green tyre, there is provided a step a') of transferring and storing the built carcass structure into a work station for storing carcass structures arranged externally to the carcass structure building line 2, or a step a") of transferring and storing the built carcass structure into the drum accumulating work station 0.

Likewise, after the step b) of building the crown structure of the green tyre, there may be provided a step b') of transferring and storing the built crown structure into a crown structure storing work stations 41.

According to preferred embodiments, the process for producing tyres provides that at least one between sub-steps a5), b2), b4) and b5) comprises the pre-step g) of supplying elementary semi-finished products in the respective work stations.

The process further comprises the additional step h) of preparing elementary semi-finished products in a semi-finished product preparation line 31.

There is further provided a step i) of adjusting the dimensions of at least one between the first forming drum 6, the second forming drum 7 and the third forming drum 27.

In the preferred embodiments, said step i) comprises the axial adjustment of the first forming drum 6 and the radial adjustment of the second forming drum 7.

The first forming drum 6 is preferably transferred from a work station of the carcass structure building line 2 to the next work station by a carriage moving on a travel line.

Preferably, the second/third forming drum 7/27 is transferred from a work station of the crown structure building line 3/3' to the next work station by at least one robotized arm 38.

The process finally provides that at least one of sub-steps a1) - a10) is preceded by a step for transferring the first forming drum 6 into the drum accumulating work station 0 for making up for any failures or changes in the production requirements.

Within the framework of the present description and in the following claims, all numerical values indicating amounts, parameters, percentages and so on are always to be deemed as preceded by the term "about", if not otherwise stated. Moreover, all numerical value ranges include all possible combinations of the maximum and minimum numerical values and all possible intermediate ranges, besides those specifically indicated in the text.

## Claims

1. Process for producing tyres for vehicle wheels comprising the steps of:
a) building a carcass structure of a green tyre on a first forming drum (6) in at least one carcass structure building line (2, 2'), said carcass structure comprising at least one carcass ply and a pair of annular anchoring structures;
b) building a crown structure of a green tyre on at least one second forming drum (7) in at least one crown structure building line (3, 3'), said crown structure comprising at least one belt structure and a tread band;
c) toroidally shaping said carcass structure assembling it to said crown structure in at least one assembling and shaping work station (4) for the tyre being processed, said assembling and shaping work station (4) being synchronised with said carcass structure building line (2, 2') and with said crown structure building line (3, 3');
wherein each carcass structure is associated with the respective first forming drum (6) whereon it is built up to the end of step c) of shaping and assembling the tyre being processed;
d) moulding and vulcanizing the green shaped tyre in at least one tyre moulding and vulcanizing line (5) separate from said assembling and shaping work station (4).

2. Process for producing tyres for vehicle wheels according to claim 1, wherein said carcass structure building line (2, 2') operates at a production rate equal to t1, said crown structure building line (3, 3') operates at a production rate equal to t2 and said assembling and shaping line (4) operates at a production rate equal to t̅ wherein t1 and t2 are comprised in the range 0.9 t̅ - 1.3 t̅ in steady operation.

3. Process for producing tyres according to any one of the previous claims, wherein t̅, t1 and t2 are substantially equal.

4. Process for producing tyres according to any one of the previous claims, wherein t̅ is comprised between 50 and 90 s.

5. Process for producing tyres according to any one of the previous claims, further comprising the step z) of picking up a first forming drum (6) from a drum accumulating work station (0) and placing it in said carcass structure building line (2, 2').

6. Process for producing tyres according to any one of the previous claims, wherein the step a) of building the carcass structure comprises sub-step a10) of applying at least one first portion of sidewalls of the tyre being processed in a first sidewall building work station (19) of the carcass structure building line (2, 2').

7. Process for producing tyres according to any one of the previous claims, wherein the step b) comprises at least sub-step b7) of applying a second portion of sidewalls of the tyre being processed in a second sidewall building work station (26) of the crown structure building line (3, 3').

8. Process for producing tyres according to any one of the previous claims, wherein said step b) of building the crown structure comprises the further sub-step of:
b7) applying at least one second portion of sidewalls of the tyre being processed in a position axially external to said tread band.

9. Process for producing tyres according to any one of the previous claims comprising, before step d), the step e) of transferring the shaped green tyre into a green tyre storing work stations (30) operatively associated with the assembling and shaping work station (4).

10. Process for producing tyres according to any one of the previous claims, wherein the step c) of shaping and assembling the green tyre comprises the following sub-step:
c1) transferring the crown structure from the second forming drum (7) whereon it has been built in a position radially external to the carcass structure associated with the first forming drum (6).

11. Process for producing tyres according to any one of the previous claims, comprising after the step a) of building the carcass structure of the green tyre, a step a') of transferring and storing the built carcass structure into a work station for storing carcass structures, arranged externally to the carcass structure building line (2).

12. A process for producing tyres according to any one of claims 1 - 10 comprising, after the step a) of building the carcass structure of the green tyre, a step a") of transferring and storing the built carcass structure into the drum accumulating work station (0).

13. A process for producing tyres according to any one of the previous claims comprising, after the step b) of building the crown structure of the green tyre, a step b') of transferring and storing the built crown structure into a crown structure storing work station (41).

14. Plant (1, 1') for producing tyres for vehicle wheels comprising:
- at least one carcass structure building line (2, 2') on a first forming drum (6), said carcass structure comprising at least one carcass ply and a pair of annular anchoring structures;
- at least one crown structure building line (3, 3') on at least one second forming drum (7), said crown structure comprising at least one belt structure and a tread band;
- at least one assembling and shaping work station (4) for the tyre being processed suitable for shaping a carcass structure by assembling it to said crown structure so as to obtain a green tyre, said assembling and shaping work station (4) being operatively associated with said carcass structure building line (2, 2') and with said crown structure building line (3, 3');
- at least one moulding and vulcanizing line (5) of the assembled and shaped tyre separate from said assembling and shaping work station (4),
wherein said assembling and shaping work station (4) is provided with shaping devices, associable to said first forming drum (6), suitable for performing the shaping of the carcass structure on said first forming drum (6).

15. Plant (1) for producing tyres for vehicle wheels according to claim 14, wherein said assembling and shaping work station (4) is further provided with transfer devices suitable for transferring the second forming drum (7) in the crown structure building line (3), after the crown structure has been removed therefrom.

16. Plant (1') for producing tyres for vehicle wheels according to claim 14, wherein said assembling and shaping work station (4) is further provided with transfer devices suitable for transferring a third forming drum (27) in the crown structure building line (3'), after the crown structure has been removed therefrom.

17. Plant (1, 1') for producing tyres for vehicle wheels according to any one of claims 14 - 16, further comprising a drum accumulating work station (0) provided with devices for transferring a first forming drum (6) to the carcass structure building line (2, 2').

18. Plant (1, 1') for producing tyres according to any one of claims 14 - 17, wherein the carcass structure building line (2, 2') comprises a first sidewall building work station (19) provided with devices for applying at least one first portion of sidewalls of the tyre being processed.

19. Plant (1, 1') for producing tyres according to any one of claims 14 - 18, wherein the crown structure building line (3, 3') comprises a second sidewall building work station (26) provided with devices for applying at least one second portion of sidewalls of the tyre being processed.

20. Plant (1, 1') for producing tyres according to any one of claims 14 -19, wherein the crown structure building line (3, 3') comprises a second sidewall building work station (26) provided with devices for building at least one second portion of sidewalls in a position axially external to the tread band.

21. Plant (1, 1') for producing tyres according to any one of claims 14 - 20, comprising a green tyre storing work stations (30) operatively associated with the assembling and shaping work station (4).

22. Plant (1, 1') for producing tyres according to claim 21, comprising devices for transferring the green tyre from the assembling and shaping work station (4) into the green tyre storing work stations (30).

23. Plant (1, 1') for producing tyres according to any one of claims 14 -22, wherein the assembling and shaping work station (4) of the green tyre comprises:
- at least one stand-by position of the second forming drum (7) or of the third forming drum (27);
- devices for transferring the crown structure in order to transfer it to a position radially external to the carcass structure associated with the first forming drum (6).

24. Plant (1, 1') for producing tyres according to any one of claims 14 - 23, comprising a work station for storing carcass structures positioned externally to the carcass structure building line (2, 2').

25. Plant (1, 1') for producing tyres according to any one of claims 14 - 24, comprising devices for adjusting the dimensions of at least one between the first forming drum (6), the second forming drum (7) and the third forming drum (27).

## Patentansprüche

1. Verfahren zum Herstellen von Reifen für Fahrzeugräder mit den Schritten des:
a) Ausbildens einer Karkassenstruktur eines unbearbeiteten Reifens auf einer ersten Formungstrommel (6) in wenigstens einer Fertigungsstraße (2, 2') für Karkassenstrukturen, wobei die Karkassenstruktur wenigstens eine Karkassenlage und ein Paar ringförmiger Verankerungsstrukturen aufweist;
b) Fertigens einer Zenitstruktur eines unbearbeiteten Reifens auf wenigstens einer zweiten Formungstrommel (2) in wenigstens einer Fertigungsstraße (3, 3') für Zenitstrukturen, wobei die Zenitstruktur wenigstens eine Gürtelstruktur und ein Laufflächenband aufweist;
c) ringförmigen Ausformens der Karkassenstruktur beim Anordnet dieser an der Zenitstruktur in wenigstens einer Anordnung- und Ausformungs-Bearbeitungsstation (4) für den Reifen, der verarbeitet wird, wobei die Anordnungs- und Formungs-Bearbeitungsstation (4) mit der Fertigungsstraße (2, 2') für Karkassenstrukturen und der Fertigungsstraße (3, 3') für Zenitstrukturen synchronisiert ist;
wobei jede Karkassenstruktur der jeweiligen ersten Formungstrommel (6), auf der diese bis zu dem Ende des Schritts c) des Ausformens und Anordnens des Reifens, der verarbeitet wird, aufgebaut wird, zugeordnet ist;
d) Formpressens und Vulkanisierens des unbearbeiteten ausgeformten Reifens in wenigstens einer Formpress-und Vulkanisierungsstraße (5) für Reifen, die von der Anordnungs- und Ausformungs-Bearbeitungsstation (4) getrennt ist.

2. Verfahren zum Herstellen von Reifen für Fahrzeugräder nach Anspruch 1, bei dem die Fertigungsstraße (2, 2') für Karkassenstrukturen mit einer Produktionsrate von t1 betrieben wird, bei dem die Fertigungsstraße (3, 3') für Zenitstrukturen mit einer Produktionsrate gleich t2 betrieben wird, und bei dem die Anordnungs- und Formungs-Straße (4) mit einer Produktionsrate von *t̅* betrieben wird, wobei t1 und t2 im Bereich zwischen 0,9 *t̅* und 1,3 *t̅* in einem Gleichgewichtsbetrieb liegen.

3. Verfahren zum Herstellen von Reifen nach einem der vorhergehenden Ansprüche, bei dem *t̅*, t1 und t2 im Wesentlichen gleich sind.

4. Verfahren zum Herstellen von Reifen nach einem der vorhergehenden Ansprüche, bei dem *t̅* zwischen 50 und 90 s liegt.

5. Verfahren zum Herstellen von Reifen nach einem der vorhergehenden Ansprüche, ferner mit dem Schritt z) des Aufhebens einer ersten Formungstrommel (6) von einer Bearbeitungsstation (0) zum Ansammeln von Trommeln und des Platzierens dieser in der Fertigungsstraße (2, 2') für Karkassenstrukturen.

6. Verfahren zum Herstellen von Reifen nach einem der vorhergehenden Ansprüche, bei dem Schritt a) des Fertigens der Karkassenstruktur als Unterschritt a10) das Aufbringen wenigstens eines ersten Abschnitts von Seitenwänden des Reifens, der verarbeitet wird, in einer ersten Bearbeitungsstation (19) für das Fertigen von Seitenwänden der Fertigungsstraße (2, 2') für Karkassenstrukturen aufweist.

7. Verfahren zum Herstellen von Reifen nach einem der vorhergehenden Ansprüche, bei dem Schritt b) wenigstens Unterschritt b7) des Aufbringens eines zweiten Abschnitts von Seitenwänden des Reifens, der verarbeitet wird, in einer zweiten Bearbeitungsstation (26) zum Fertigen von Seitenwänden der Fertigungsstraße (3, 3') für Zenitstrukturen aufweist.

8. Verfahren zum Herstellen von Reifen nach einem der vorhergehenden Ansprüche, bei dem Schritt b) des Fertigens der Zenitstruktur als weiteren Unterschritt aufweist:
b7) das Aufbringen wenigstens eines zweiten Abschnitts der Seitenwände des Reifens, der verarbeitet wird, an einer Position, die axial außerhalb des Laufflächenbands liegt.

9. Verfahren zum Herstellen von Reifen nach einem der vorhergehenden Ansprüche mit, vor Schritt d), dem Schritt e) des Übertragens des ausgeformten unbearbeiteten Reifens zu Bearbeitungsstationen (30) zum Aufbewahren unbearbeiteter Reifen, die operativ der Anordnungs- und Ausformungs-Bearbeitungsstation (4) zugeordnet sind.

10. Verfahren zum Herstellen von Reifen nach einem der vorhergehenden Ansprüche, bei dem Schritt c) des Ausformens und Anordnens des unbearbeiteten Reifens folgenden Unterschritt aufweist:
c1) Übertragen der Zenitstruktur von der zweiten Formungstrommel (7), auf welcher diese gefertigt wurde, zu einer Position radial außerhalb der Karkassenstruktur, die der ersten Formungstrommel (6) zugeordnet ist.

11. Verfahren zum Herstellen von Reifen nach einem der vorhergehenden Ansprüche mit, nach dem Schritt a) des Fertigens der Karkassenstruktur des unbearbeiteten Reifens, einem Schritt a') des Übertragens und Aufbewahrens der gefertigten Karkassenstruktur in eine Bearbeitungsstation zum Aufbewahren von Karkassenstrukturen, welche außerhalb der Fertigungsstraße (2) für Karkassenstrukturen angeordnet ist.

12. Verfahren zum Herstellen von Reifen nach einem der Ansprüche 1 bis 10 mit, nach dem Schritt a) des Fertigens der Karkassenstruktur des unbearbeiteten Reifens, einem Schritt a") des Übertragens und Aufbewahrens der gefertigten Karkassenstruktur in der Bearbeitungsstation (0) zum Ansammeln von Trommeln.

13. Verfahren zum Herstellen von Reifen nach einem der vorhergehenden Ansprüche mit, nach dem Schritt b) des Fertigens der Zenitstruktur des unbearbeiteten Reifens, einem Schritt b') des Übertragens und Aufbewahrens der gefertigten Zenitstruktur in einer Bearbeitungsstation (41) zum Aufbewahren von Zenitstrukturen.

14. Fabrik (1, 1') zum Herstellen von Reifen für Fahrzeugräder mit:
- wenigstens einer Fertigungsstraße (2, 2') für Karkassenstrukturen auf einer ersten Formungstrommel (6), wobei die Karkassenstruktur wenigstens eine Karkassenlage und ein Paar ringförmiger Verankerungsstrukturen aufweist;
- wenigstens einer Fertigungsstraße (3, 3') für Zenitstrukturen auf wenigstens einer zweiten Formungstrommel (7), wobei die Zenitstruktur wenigstens eine Gürtelstruktur und ein Laufflächenband aufweist;
- wenigstens einer Anordnungs- und Ausformungs-Bearbeitungsstation (4) für den Reifen, der verarbeitet wird, welche in der Lage ist, eine Karkassenstruktur auszuformen, indem sie diese so an der Zenitstruktur anordnet, dass ein unbearbeiteter Reifen erhalten wird, wobei die Anordnungs- und Ausformungs-Bearbeitungsstation (4) operativ der Fertigungsstraße (2, 2') für Karkassenstrukturen und der Fertigungsstraße (3, 3') für Zenitstrukturen zugeordnet ist;
- wenigstens einer Formpress- und Vulkanisierungsstraße (5) des angeordneten und ausgeformten Reifens, die von der Anordnungs- und Ausformungs-Bearbeitungsstation (4) getrennt ist,
wobei die Anordnungs- und Ausformungs-Bearbeitungsstation (4) mit Ausformungseinrichtungen versehen ist, die der ersten Formungstrommel (6) zugeordnet werden können, die in der Lage sind, das Ausformen der Karkassenstruktur auf der ersten Formungstrommel (6) durchzuführen.

15. Fabrik (1) zum Herstellen von Reifen für Fahrzeugräder nach Anspruch 14, bei der die Anordnungs- und Ausformungs-Bearbeitungsstation (4) ferner mit Übertragungseinrichtungen versehen ist, die in der Lage sind, die zweite Formungstrommel (7) in der Fertigungsstraße (3) für Zenitstrukturen zu übertragen, nachdem die Zenitstruktur von dieser entfernt wurde.

16. Fabrik (1') zum Herstellen von Reifen für Fahrzeugräder nach Anspruch 14, bei der die Anordnungs- und Ausformungs-Bearbeitungsstation (4) ferner mit Übertragungseinrichtungen versehen ist, die in der Lage sind, eine dritte Formungstrommel (27) in der Fertigungsstraße (3') für Zenitstrukturen zu übertragen nachdem die Zenitstruktur von dieser entfernt wurde.

17. Fabrik (1, 1') zum Herstellen von Reifen für Fahrzeugräder nach einem der Ansprüche 14 bis 16, ferner mit einer Bearbeitungsstation (0) zum Ansammeln von Trommeln, die mit Einrichtungen zum Übertragen einer ersten Formungstrommel (6) zu der Fertigungsstraße (2, 2') für Karkassenstrukturen hin ausgestattet ist.

18. Fabrik (1, 1') zum Herstellen von Reifen nach einem der Ansprüche 14 bis 17, bei der die Fertigungsstraße (2, 2') für Karkassenstrukturen eine erste Bearbeitungsstation (19) zum Fertigen von Seitenwänden aufweist, die mit Einrichtungen versehen ist, um wenigstens einen ersten Abschnitt der Seitenwände des Reifens, der verarbeitet wird, aufzubringen.

19. Fabrik (1, 1') zum Herstellen von Reifen nach einem der Ansprüche 14 bis 18, bei der die Fertigungsstraße (3, 3') für Zenitstrukturen eine zweite Bearbeitungsstation (26) zum Fertigen von Seitenwänden aufweist, die mit Einrichtungen versehen ist, um wenigstens einen zweiten Abschnitt der Seitenwände des Reifens, der verarbeitet wird, aufzubringen.

20. Fabrik (1, 1') zum Fertigen von Reifen nach einem der Ansprüche 14 bis 19, bei der die Fertigungsstraße (3, 3') für Zenitstrukturen eine zweite Bearbeitungsstation (26) zum Fertigen von Seitenwänden aufweist, die mit Einrichtungen versehen ist, um wenigstens einen zweiten Abschnitt der Seitenwände an einer Position axial außerhalb des Laufflächenbands zu fertigen.

21. Fabrik (1, 1') zum Herstellen von Reifen nach einem der Ansprüche 14 bis 20, mit Bearbeitungsstationen (30) zum Aufbewahren von unbearbeiteten Reifen, die operativ der Anordnungs- und Ausformungs-Bearbeitungsstation (4) zugeordnet sind.

22. Fabrik (1, 1') zum Herstellen von Reifen nach Anspruch 21, mit Einrichtungen zum Übertragen des unbearbeiteten Reifens von der Anordnungs- und Ausformungs-Bearbeitungsstation (4) zu den Bearbeitungsstationen (30) zum Aufbewahren von unbearbeiteten Reifen,

23. Fabrik (1, 1') zum Herstellen von Reifen nach einem der Ansprüche 14 bis 22, bei der die Anordnungs- und Ausformungs-Bearbeitungsstation (4) für den unbearbeiteten Reifen aufweist:
- wenigstens eine Warteposition für die zweite Formungstrommel (7) oder die dritte Formungstrommel (27);
- Einrichtungen zum Übertragen der Zenitstruktur, um sie zu einer Position radial außerhalb derjenigen Karkassenstruktur zu übertragen, die der ersten Formungstrommel (6) zugeordnet ist.

24. Fabrik (1, 1') zum Herstellen von Reifen nach einem der Ansprüche 14 bis 23 mit einer Bearbeitungsstation zum Aufbewahren von Karkassenstrukturen, die außerhalb der Fertigungsstraße (2, 2') für Karkassenstrukturen angeordnet ist.

25. Fabrik (1, 1') zum Herstellen von Reifen nach einem der Ansprüche 14 bis 24 mit Einrichtungen zum Anpassen der Abmessungen der ersten Formungstrommel (6), der zweiten Formungstrommel (7) und/oder der dritten Formungstrommel (27).

## Revendications

1. Procédé pour produire des pneus pour roues de véhicule comprenant les étapes de :
a) fabrication d'une structure de carcasse d'un pneu vert sur un premier tambour de formage (6) dans au moins une ligne de fabrication de structure de carcasse (2, 2'), ladite structure de carcasse comprenant au moins un nappe de carcasse et une paire de structures d'ancrage annulaires ;
b) fabrication d'un structure de couronne d'un pneu vert sur au moins un deuxième tambour de formage (7) dans au moins une ligne de fabrication de structure de couronne (3, 3'), ladite structure de couronne comprenant au moins une structure de ceinture et une bande de roulement ;
c) mise en forme toroïdale de ladite structure de carcasse par son assemblage à ladite structure de couronne dans au moins une station de travail d'assemblage et de mise en forme (4) pour le pneu en cours de traitement, ladite station de travail d'assemblage et de mise en forme (4) étant synchronisée avec ladite ligne de fabrication de structure de carcasse (2, 2') et avec ladite ligne de fabrication de structure de couronne (3, 3') ;
dans lequel chaque structure de carcasse est respectivement associée avec ledit premier tambour de formage (6) sur lequel elle est construite jusqu'à la fin de l'étape c) de mise en forme et d'assemblage du pneu en cours de traitement ;
d) moulage et vulcanisation du pneu vert formé sur au moins une ligne de moulage et de vulcanisation du pneu (5), séparée de ladite station de travail d'assemblage et de mise en forme (4).

2. Procédé pour produire des pneus pour roues de véhicule selon la revendication 1, dans lequel ladite ligne de fabrication de structure de carcasse (2, 2') fonctionne à une cadence de production égale à t1, ladite ligne de fabrication de structure de couronne (3, 3')fonctionne à une cadence de production de t2 et ladite ligne d'assemblage et de mise en forme (4) fonctionne à une cadence de production de **t̅** dans lequel t1 et t2 sont comprises dans l'intervalle **0.9t̅ - 1.3t̅** en fonctionnement régulier.

3. Procédé pour produire des pneus selon l'une quelconque des revendications précédentes, dans lequel **t̅**, t1 et t2 sont sensiblement égales.

4. Procédé pour produire des pneus selon l'une quelconque des revendications précédentes, dans lequel **t̅** est comprise entre 50 et 90 s.

5. Procédé pour produire des pneus selon l'une quelconque des revendications précédentes, comprenant en outre l'étape z) de prise d'un premier tambour de formage (6) à partir d'une station de travail d'accumulation de tambour (0) et de mise en place de celui-ci sur ladite ligne de fabrication de structure de carcasse (2, 2').

6. Procédé pour produire des pneus selon l'une quelconque des revendications précédentes, dans lequel l'étape a) de fabrication de structure de carcasse comprend une sous-étape a10) d'application d'au moins une première partie de flancs du pneu en cours de traitement dans une première station de travail de fabrication de flancs (19) de la ligne de fabrication de structure de carcasse (2, 2').

7. Procédé pour produire des pneus selon l'une quelconque des revendications précédentes, dans lequel l'étape b) comprend au moins une sous-étape b7) d'application d'une deuxième partie de flancs du pneu en cours de traitement dans une deuxième station de travail de fabrication de flancs (26) de la ligne de fabrication de structure de couronne (3, 3').

8. Procédé pour produire des pneus selon l'une quelconque des revendications précédentes, dans lequel l'étape b) de fabrication de structure de couronne comprend la sous-étape supplémentaire de :
b7) application d'au moins une deuxième partie de flancs du pneu en cours de traitement dans une position axialement externe relativement à ladite bande de roulement.

9. Procédé pour produire des pneus selon l'une quelconque des revendications précédentes comprenant, préalablement à l'étape d), l'étape e) de transfert du pneu vert mis en forme dans une station(s) de travail de stockage de pneu vert (30) fonctionnellement associée à la station de travail d'assemblage et de mise en forme (4).

10. Procédé pour produire des pneus selon l'une quelconque des revendications précédentes, dans lequel l'étape c) de mise en forme et d'assemblage du pneu vert comprend la sous-étape suivante :
c1) transfert de la structure de couronne à partir du second tambour de formage (7) sur lequel elle a été fabriquée en une position radialement externe sur la structure de carcasse associée au premier tambour de formage (6),

11. Procédé pour produire des pneus selon l'une quelconque des revendications précédentes, comprenant postérieurement à l'étape a) de fabrication de la structure de carcasse du pneu vert, une étape a') de transfert et stockage de la structure de carcasse fabriquée dans une station de travail de stockage de structures de carcasse, disposée extérieurement à la ligne de fabrication de structure de carcasse (2).

12. Procédé pour produire des pneus selon l'une quelconque des revendications 1-10 comprenant, postérieurement à l'étape a) de fabrication de la structure de carcasse du pneu vert, une étape a") de transfert et stockage de la structure de carcasse fabriquée dans la station de travail d'accumulation de tambour (0).

13. Procédé pour produire des pneus selon l'une quelconque des revendications précédentes comprenant, postérieurement à l'étape b) de fabrication de la structure de couronne du pneu vert, une étape b') de transfert et stockage de la structure de couronne fabriquée dans une station de travail de stockage de structure de couronne (41).

14. Installation (1, 1') pour produire des pneus pour roues de véhicule comprenant :
- au moins une ligne de fabrication de structure de carcasse (2, 2') sur un premier tambour de formage (6), ladite structure de carcasse comprenant au moins une nappe de carcasse et une paire de structures d'ancrage annulaires ;
- au moins une ligne de fabrication de structure de couronne (3, 3') sur au moins un deuxième tambour de formage (7), ladite structure de couronne comprenant au moins une structure de ceinture et une bande de roulement ;
- au moins une station de travail d'assemblage et de mise en forme (4) pour le pneu en cours de traitement appropriée pour mettre en forme une structure de carcasse par son assemblage à ladite structure de couronne pour obtenir un pneu vert, ladite station de travail d'assemblage et de mise en forme (4) étant fonctionnellement associée à ladite ligne de fabrication de structure de carcasse (2, 2') et à ladite ligne de fabrication de structure de couronne (3, 3') ;
- au moins une ligne de moulage et de vulcanisation (5) du pneu assemble et mis en forme, séparée de ladite station de travail d'assemblage et mise en forme (4),
dans laquelle ladite station d'assemblage et de mise en forme (4) est pourvue de dispositifs de mise en forme, associables audit premier tambour de formage (6), appropriés pour accomplir la mise en forme de ladite structure de carcasse sur ledit premier tambour de formage (6).

15. Installation (1) pour produire des pneus pour roues de véhicule selon la revendication 14, dans laquelle ladite station de travail d'assemblage et de mise en forme (4) est en outre pourvue de dispositifs de transfert appropriés pour transférer le deuxième tambour de formage (7) dans la ligne de fabrication de structure de couronne (3), après que la structure de couronne en a été enlevée.

16. Installation (1') pour produire des pneus pour roues de véhicule selon la revendication 14, dans laquelle ladite station de travail d'assemblage et de mise en forme (4) est en outre pourvue de dispositifs de transfert appropriés pour transférer un troisième tambour de formage (27) dans la ligne de fabrication de structure de couronne (3'), après que la structure de couronne en a été enlevée.

17. Installation (1, 1') pour produire des pneus pour roues de véhicule selon l'une quelconque des revendications 14-16, comprenant en outre une station de travail d'accumulation de tambour (0) pourvue de dispositifs pour transférer un premier tambour de formage (6) vers la ligne de fabrication de structure de carcasse (2, 2').

18. Installation (1, 1') pour produire des pneus pour roues de véhicule selon l'une quelconque des revendications 14-17, dans laquelle la ligne de fabrication de structure de carcasse (2, 2') comprend une première station de travail de fabrication de flancs (19) pourvue de dispositifs pour appliquer au moins une première partie de flancs du pneu en cours de traitement.

19. Installation (1, 1') pour produire des pneus selon l'une quelconque des revendications 14-18, dans laquelle la ligne de fabrication de structure de couronne (3, 3') comprend une deuxième station de travail de fabrication de flancs (26) pourvue de dispositifs pour appliquer au moins une seconde partie de flancs du pneu en cours de traitement.

20. Installation (1, 1') pour produire des pneus selon l'une quelconque des revendications 14-19, dans laquelle la ligne de fabrication de structure de couronne (3, 3') comprend une deuxième station de travail de fabrication de flancs (26) pourvue de dispositifs pour fabriquer au moins une seconde partie de flancs dans une position axialement externe relativement à la bande de roulement.

21. Installation (1, 1') pour produire des pneus selon l'une quelconque des revendications 14-20, comprenant une station(s) de travail de stockage de pneu vert (30) fonctionnellement associée à la station de travail d'assemblage et de mise en forme (4).

22. Installation (1, 1') pour produire des pneus selon la revendication 21, comprenant des dispositifs pour transférer le pneu vert depuis la station de travail d'assemblage et de mise en forme (4) dans la station(s) de travail de stockage de pneu vert (30).

23. Installation (1, 1') pour produire des pneus selon l'une quelconque des revendications 14-22, dans laquelle la station de travail d'assemblage et de mise en forme (4) du pneu vert comprend :
- au moins une position d'attente du deuxième tambour de formage (7) ou du troisième tambour de formage (27) ;
- des dispositifs pour transférer la structure de couronne pour la transférer en une position radialement externe à la structure de carcasse associée au premier tambour de formage (6).

24. Installation (1, 1') pour produire des pneus selon l'une quelconque des revendications 14-23, comprenant une station de travail pour stocker des structures de carcasse positionnées à l'extérieur de la ligne de fabrication de structure de carcasse (2, 2').

25. Installation (1, 1') pour produire des pneus selon l'une quelconque des revendications 14-24, comprenant des dispositifs pour régler les dimensions d'au moins un parmi le premier tambour de formage (6), le deuxième tambour de formage (7) et le troisième tambour de formage (27).
